(19) Europäisches Patentamt / European Patent Office / Office européen des brevets

(11) **EP 2 872 884 B1**

(12) **FASCICULE DE BREVET EUROPEEN**

(45) Date de publication et mention de la délivrance du brevet:
**26.09.2018 Bulletin 2018/39**

(21) Numéro de dépôt: **13747440.9**

(22) Date de dépôt: **12.07.2013**

(51) Int Cl.:
*G01N 29/26* (2006.01)          *G01N 29/44* (2006.01)
*G01N 29/46* (2006.01)          *G01N 29/06* (2006.01)
*G01S 7/52* (2006.01)          *G01S 15/00* (2006.01)
*G01S 15/89* (2006.01)

(86) Numéro de dépôt international:
**PCT/FR2013/051677**

(87) Numéro de publication internationale:
**WO 2014/009671 (16.01.2014 Gazette 2014/03)**

(54) **PROCÉDÉ DE TRAITEMENT DE SIGNAUX ISSUS D'UNE ACQUISITION PAR SONDAGE ULTRASONORE, PROGRAMME D'ORDINATEUR ET DISPOSITIF DE SONDAGE À ULTRASONS CORRESPONDANTS**

VERFAHREN ZUR VERARBEITUNG VON ULTRASCHALLTESTDATEN, COMPUTERPROGRAMM UND ENTSPRECHENDE ULTRASCHALLTESTVORRICHTUNG

METHOD OF PROCESSING ULTRASONIC TESTING DATA, COMPUTER PROGRAM AND CORRESPONDING ULTRASONIC TESTING APPARATUS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **12.07.2012 FR 1256718**

(43) Date de publication de la demande:
**20.05.2015 Bulletin 2015/21**

(73) Titulaire: **Commissariat à l'Énergie Atomique et aux Énergies Alternatives 75015 Paris (FR)**

(72) Inventeurs:
- **BANNOUF, Souad**
  **F-93800 Epinay sur Seine (FR)**
- **CASULA, Olivier**
  **F-91310 Longpont-sur-Orge (FR)**
- **PRADA JULIA, Claire**
  **F-75006 Paris (FR)**
- **ROBERT, Sébastien**
  **F-94270 Le Kremlin-Bicêtre (FR)**

(74) Mandataire: **Bonnet, Michel Cabinet Bonnet 93, rue Réaumur - Boîte 10 75002 Paris (FR)**

(56) Documents cités:
**US-A1- 2005 154 306     US-A1- 2011 125 014**

- **JEAN-GABRIEL MINONZIO ET AL: "Measurement of guided mode wave vectors by analysis of the transfer matrix obtained with multi-emitters and multi-receivers in contact", JOURNAL OF PHYSICS: CONFERENCE SERIES, vol. 269, 1 janvier 2011 (2011-01-01), page 012003, XP055057744, DOI: 10.1088/1742-6596/269/1/012003**
- **JEAN-GABRIEL MINONZIO ET AL: "Measurement of guided mode phase velocities using multi-emitters and multi-receivers arrays in contact and transmission matrix analysis", ULTRASONICS SYMPOSIUM (IUS), 2009 IEEE INTERNATIONAL, IEEE, PISCATAWAY, NJ, USA, 20 septembre 2009 (2009-09-20), pages 1-4, XP031818155, ISBN: 978-1-4244-4389-5**

**Description**

La présente invention concerne un procédé de traitement de signaux issus d'une acquisition par sondage ultrasonore, notamment pour réaliser de l'imagerie ultrasonore. Elle concerne également un programme d'ordinateur et un dispositif de sondage à ultrasons correspondants.

L'invention s'applique en particulier au domaine du contrôle non destructif par ultrasons, dans lequel l'acquisition de signaux ultrasonores permet de visualiser et détecter des défauts dans des structures, mais elle peut aussi s'appliquer à tout type d'imagerie échographique ultrasonore, notamment au domaine médical pour l'inspection de zones d'intérêt dans le corps humain ou animal.

Elle porte plus particulièrement sur un procédé de traitement acquérant les signaux ultrasonores de la façon suivante :

- commande d'une pluralité de transducteurs d'émission pour L émissions successives d'ondes ultrasonores vers une zone d'intérêt,
- commande de N transducteurs de réception de manière à recevoir simultanément et pendant une durée prédéterminée, pour chaque émission successive, N signaux de mesure, mesurant en particulier des échos bruités dus à des réflexions de l'émission considérée dans la zone d'intérêt,
- obtention d'une matrice de signaux temporels ultrasonores de taille LxN, chaque coefficient $K_{i,j}(t)$ de cette matrice représentant le signal de mesure reçu par le j-ème transducteur de réception dû à la i-ème émission.

Une telle acquisition se fait généralement à l'aide d'un dispositif de sondage à capteur multiéléments, dans lequel chaque transducteur est à la fois émetteur et récepteur, une commutation entre ces deux modes pouvant être commandée électroniquement. Le capteur peut être mis au contact de l'objet à sonder ou à distance, mais dans ce dernier cas il doit être immergé pour assurer la transmission des ondes ultrasonores dans l'objet à sonder. Ce capteur peut être linéaire (1D) ou matriciel (2D), à éléments rigides ou flexibles.

La matrice de signaux temporels obtenue par ce type d'acquisition peut alors faire l'objet d'un traitement, notamment pour la fourniture d'une image de la zone d'intérêt inspectée ou pour l'extraction de paramètres significatifs de défauts de structure dans la zone d'intérêt inspectée. Compte tenu des capacités de calcul actuelles des processeurs, ce traitement peut être embarqué dans les instruments de contrôle pour des traitements en temps réel.

Dans la pratique, l'acquisition ultrasonore précédemment définie, généralement qualifiée d'acquisition FMC (de l'anglais « Full Matrix Capture »), consiste à émettre une onde ultrasonore en excitant le premier transducteur d'émission et à recevoir les échos de cette émission avec l'ensemble des N transducteurs de réception, puis à commuter électroniquement sur l'ensemble des transducteurs d'émission pour les exciter successivement. Les transducteurs d'émission et de réception peuvent être localisés sur deux capteurs distincts, mais quand ce sont les mêmes transducteurs qui remplissent les fonctions d'émission et de réception, on obtient une matrice K(t) de signaux temporels ultrasonores de taille NxN.

Dans l'article de C. Holmes et al, intitulé « Post-processing of the full matrix of ultrasonic transmit-receive array data for non-destructive evaluation », publié dans NDT&E International 38 (disponible en ligne le 15 juin 2005), pages 701-711, les coefficients de la matrice K(t) sont exploités pour réaliser une focalisation synthétique de type « focalisation en tous points » qui permet d'obtenir une image haute résolution de la zone d'intérêt.

Plus précisément, cette focalisation synthétique consiste à calculer pour chaque point de la zone d'intérêt les temps de vol $T_{i,j}$ correspondant aux temps de parcours entre chaque transducteur d'émission (indice i) et chaque transducteur de réception (indice j) en passant par le point considéré (LxN temps de vol pour chaque point). La focalisation synthétique s'opère en sommant, pour chaque point de la zone d'intérêt, les amplitudes extraites des signaux $K_{i,j}(t)$ aux temps $t = T_{i,j}$. L'amplitude A en un point $P$ de l'image peut donc s'écrire :

$$A(P) = \sum_{i=1}^{L} \sum_{j=1}^{N} K_{i,j}\left[T_{i,j}\right].$$

La reconstruction par focalisation en tous points peut se faire selon différents modes connus d'inspection par ultrasons : le mode direct où les temps de vol associés sont décrits ci-dessus, et d'autres modes plus complexes où les temps de vol incluent des réflexions multiples sur les frontières de la structure ainsi que des conversions de modes. Pour une explication détaillée de ces autres modes plus complexes, on pourra notamment se reporter à l'article de A. Fidahoussen et al, intitulé « Imaging of defects in several complex configurations by simulation-helped processing of ultrasonic array data », publié dans Review of Quantitative Nondestructive Evaluation, vol. 29 (2009), pages 847-854.

Cependant, appliquée à l'imagerie de pièces bruitées, la reconstruction par focalisation en tous points peut fournir des images de qualité moindre comparativement aux méthodes échographiques classiques. En effet, dans ces dernières, tous les transducteurs émettent de manière simultanée par application d'une loi de retards prédéterminée de manière à focaliser en un point donné. Or, conformément au procédé d'acquisition FMC généralement mis en oeuvre pour réaliser ensuite la reconstruction par focalisation synthétique, chaque émission est effectuée par un seul transducteur ce qui limite l'énergie transmise et la profondeur de pénétration des ondes dans la pièce inspectée. Cela se traduit finalement par une dégradation du Rapport Signal sur Bruit (RSB) car les amplitudes des signaux échos peuvent être plus faibles que le bruit électronique. Cette dégradation du RSB est d'autant plus forte que l'objet présente un fort bruit de structure, rendant difficile la détection et la caractérisation d'éventuels défauts.

Une solution partielle à ce problème de dégradation du RSB est apportée dans l'article de M. Karaman et al, intitulé « Synthetic aperture imaging for small scale systems », publié dans IEEE Transactions on Ultrasonics, Ferroelectrics, and Frequency Control, vol. 42, n°3 (mai 1995), pages 429-442.

Elle consiste à utiliser, pour chaque émission, non plus un transducteur mais M transducteurs adjacents. Une loi de retards est appliquée aux M transducteurs d'émission sollicités pour qu'ils transmettent dans le milieu une onde ultrasonore sphérique, proche de celle qui serait émise par une source virtuelle située à une certaine distance du capteur. L'onde ultrasonore ainsi émise par la source virtuelle est plus intense puisque son énergie est proportionnelle à la racine carrée du nombre de transducteurs d'émission formant cette source. Le RSB est amélioré d'autant, en supposant que le bruit engendré est principalement du bruit électronique décorrélé.

Cependant, dans le cas de pièces inspectées présentant un bruit de structure important, l'amélioration de la qualité des images finalement obtenues par focalisation synthétique en tous points est plus limitée, l'augmentation du RSB est moindre et l'impact sur la détection n'est pas aussi positif qu'on pourrait l'espérer. Cette solution compense en partie le problème précité mais ne l'élimine pas. Par ailleurs, émettre au moyen de sources virtuelles ne permet pas de s'affranchir du problème que peuvent poser les artefacts de reconstruction essentiellement dus aux échos parasites tels que les échos de géométrie ou les échos complexes incluant des réflexions multiples sur les frontières de l'objet et des conversions de modes. Enfin, on note que pour un capteur à N transducteurs d'émission/réception, la matrice K(t) de signaux temporels ultrasonores obtenue est de taille réduite LxN, où $1 \leq L \leq N-M+1$, M étant le nombre de transducteurs sollicités simultanément pour former la source virtuelle ($1 \leq M \leq N$).

Dans l'article de C. Prada et al, intitulé « Eigenmodes of the time reversal operator: a solution to selective focusing in multiple-target media », publié dans Wave Motion 20 (1994), pages 151-163, la matrice K(t) est exploitée pour réaliser une décomposition de l'opérateur de retournement temporel défini comme étant le produit conjugué (T indiquant le complexe conjugué) $K(\omega).K^T(\omega)$, où $K(\omega)$ correspond à la transformée de Fourier de la matrice K(t). Le principe décrit dans cet article est de déterminer les invariants de cet opérateur de retournement temporel. Pour ce faire, une décomposition en valeurs singulières de la matrice de signaux fréquentiels $K(\omega)$ obtenue par transformation de Fourier de la matrice de signaux temporels K(t) est réalisée suite à l'acquisition FMC. Il a en effet été remarqué que, d'une façon générale, dans la distribution des valeurs singulières obtenues, le nombre de valeurs singulières fortes (i.e. d'amplitudes significatives) est égal aux nombre de défauts dans la pièce inspectée, à condition que les défauts soient suffisamment petits et distants les uns des autres. Chaque vecteur singulier fournit alors la réponse d'un défaut (i.e. sa fonction de Green) pouvant être utilisée pour focaliser sur ce dernier sans avoir besoin d'une information précise sur les propriétés géométriques et acoustiques de l'objet. On parle de principe d'auto-focalisation. L'ordre des vecteurs singuliers est fonction du caractère plus ou moins diffusant du défaut. Ainsi, le premier vecteur singulier correspond au diffuseur le plus fort, par exemple le défaut le plus proche du capteur, et ainsi de suite.

Mais cette méthode de décomposition de l'opérateur de retournement temporel est principalement une méthode de détection par extraction de paramètres significatifs qui montre ses limites en présence d'un bruit de structure important, ou lorsque les défauts sont proches d'une frontière de l'objet inspecté, par exemple dans le cas d'un défaut proche d'un fond de pièce. En effet, dans ces cas particuliers, on n'observe pas de réel détachement d'une valeur singulière par rapport aux autres. Il est donc en réalité difficile de faire correspondre une valeur singulière à un éventuel défaut. La détection est donc plus difficile. De plus, au contraire des procédés de focalisation synthétique précités, cette méthode ne fournit pas une image, mais juste une indication sur la présence ou non d'un défaut. La localisation et la caractérisation d'un défaut requiert l'ajout d'un algorithme d'imagerie. Le document US 2011/0125014 décrit une acquisition ultrasonore de type FMC et en outre de réaliser une transformation de Fourîer discrète des coefficients des matrices K(T,t) pour obtenir, pour chaque valeur de T, une matrice K(T,f). Le critère de distinction entre valeurs singulières liées au signal et valeurs singulières liées au bruit est établi en normalisant des valeurs singulières par leur moyenne quadratique puis en comparant les valeurs singulières à un seuil prédéterminé. Il peut ainsi être souhaité de prévoir un procédé de traitement de signaux ultrasonores qui permette de s'affranchir d'au moins une partie des problèmes et contraintes précités.

Il est donc proposé un procédé de traitement de signaux ultrasonores issus d'une acquisition par sondage ultrasonore selon la revendication 1.

Ainsi, la décomposition en valeurs singulières de la matrice de signaux fréquentiels obtenue par transformation de la matrice de signaux temporels acquise est exploitée de façon astucieuse pour débruiter cette dernière, puisqu'il a été constaté qu'une partie de ces valeurs singulières est en fait directement corrélée à des bruits de structure de la pièce sondée et/ou à des échos parasites (échos d'interfaces) de l'acquisition ultrasonore par capteur à multiéléments. En reconstituant ainsi une matrice débruitée de signaux temporels, il est ensuite possible de poursuivre un traitement classique de cette dernière, par exemple pour obtenir une meilleure image ultrasonore de la zone d'intérêt sondée, sur la base de données de meilleure qualité. L'étape de débruitage se fait par :

- transformation de la matrice de signaux temporels en une matrice de signaux fréquentiels,
- décomposition en valeurs singulières de la matrice de signaux fréquentiels,
- élimination d'une partie des valeurs singulières et vecteurs singuliers associés selon un critère prédéterminé de distinction entre valeurs singulières liées à des défauts et valeurs singulières liées à du bruit,
- reconstruction d'une matrice débruitée de signaux fréquentiels à partir des valeurs singulières et vecteurs singuliers non éliminés,
- transformation inverse de cette matrice débruitée de signaux fréquentiels en une matrice débruitée de signaux temporels.

Le critère prédéterminé de distinction entre valeurs singulières liées à des défauts et valeurs singulières liées à du bruit est un critère portant sur des différences d'amplitudes successives entre valeurs singulières dans une série décroissante d'amplitudes des valeurs singulières déterminées à partir de la matrice des signaux fréquentiels, par exemple un critère de changement de courbure ou de rupture de pente dans cette série décroissante des amplitudes de valeurs singulières.

De façon optionnelle, la transformation et la transformation inverse sont des transformations de Fourier discrètes.

De façon optionnelle également, un procédé de traitement de signaux ultrasonores selon l'invention peut comporter, avant l'étape de débruitage, une étape de filtrage de la matrice des signaux temporels par suppression de toute information se trouvant à des temps de vol exclus de la zone d'intérêt.

De façon optionnelle également, un procédé de traitement de signaux ultrasonores selon l'invention peut comporter une étape de réorganisation de composantes fréquentielles des valeurs singulières et vecteurs singuliers de la matrice des signaux fréquentiels sur la base d'une optimisation de corrélations entre occurrences fréquentielles des vecteurs singuliers de manière à optimiser une correspondance entre valeurs singulières et défauts dans la zone d'intérêt et ainsi optimiser le filtrage du bruit.

De façon optionnelle également, à chaque émission successive, M transducteurs d'émission adjacents sont sollicités et une loi de retards est appliquée à ces M transducteurs d'émission de manière à émettre une onde sphérique issue d'une source virtuelle située à une distance prédéterminée de ladite pluralité de transducteurs d'émission.

De façon optionnelle également, chaque réception est effectuée par L' transducteurs de réception virtuels, chaque transducteur de réception virtuel étant formé par M' transducteurs de réception adjacents auxquels une loi de retards est appliquée.

De façon optionnelle également, un procédé de traitement de signaux ultrasonores selon l'invention peut comporter une étape supplémentaire de reconstitution d'une image numérique de la zone d'intérêt à partir de la matrice débruitée de signaux temporels, notamment par un traitement de type focalisation synthétique en tous points.

Il est également proposé un programme d'ordinateur téléchargeable depuis un réseau de communication et/ou enregistré sur un support lisible par ordinateur et/ou exécutable par un processeur, comprenant des instructions pour l'exécution des étapes d'un procédé de traitement de signaux ultrasonores selon l'invention, lorsque ledit programme est exécuté sur un ordinateur.

Il est également proposé un dispositif de sondage à ultrasons comportant :

- une sonde comprenant une pluralité de transducteurs d'émission à ultrasons et une pluralité de transducteurs de réception à ultrasons, et
- des moyens de commande des transducteurs et de traitement conçus pour mettre en oeuvre un procédé de traitement de signaux ultrasonores selon l'invention.

L'invention sera mieux comprise à l'aide de la description qui va suivre, donnée uniquement à titre d'exemple et faite en se référant aux dessins annexés dans lesquels :

- la figure 1 représente schématiquement la structure générale d'un dispositif de sondage à ultrasons selon un mode de réalisation de l'invention,
- la figure 2 illustre les étapes successives d'un procédé d'acquisition et de traitement de signaux ultrasonores mis en oeuvre par le dispositif de la figure 1, selon un mode de réalisation de l'invention,
- les figures 3 et 4 illustrent un principe d'émissions/réceptions d'ondes ultrasonores mis en oeuvre par le dispositif de la figure 1,

- les figures 5 et 6 illustrent, à l'aide de diagrammes, des distributions de valeurs singulières issues d'étapes intermédiaires du procédé de la figure 2,
- les figures 7 et 8 illustrent de façon comparative des images ultrasonores obtenues sans et avec application complète du procédé de la figure 2.

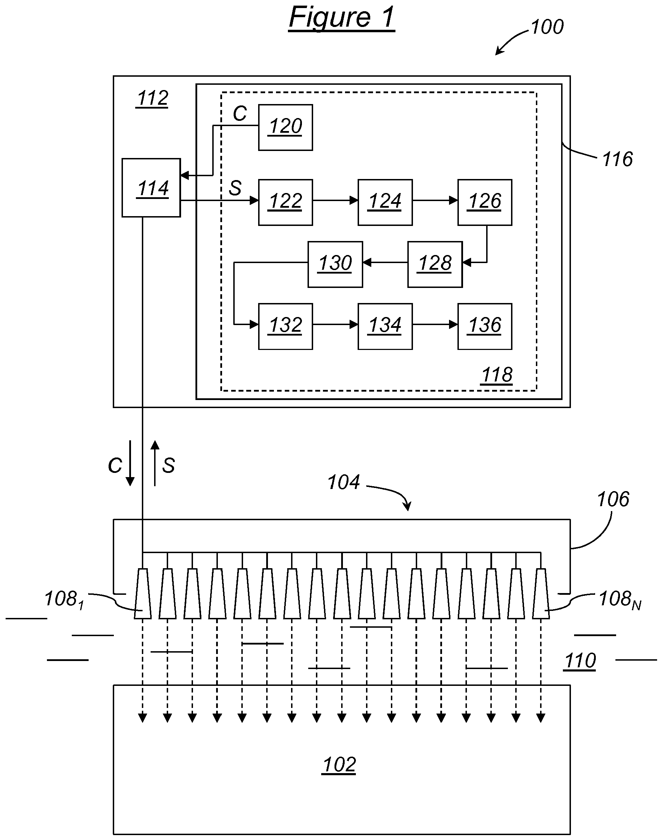

En référence à la figure 1, un dispositif de sondage 100 d'un objet 102 selon un mode de réalisation de l'invention comporte une sonde à ultrasons 104 présentant un boîtier 106, c'est-à-dire un élément de structure indéformable qui sert de référentiel attaché à la sonde 104, dans lequel sont disposés, par exemple linéairement ou matriciellement, N transducteurs $108_1$, ...,$108_N$ fixes ou mobiles.

L'objet 102 est par exemple une pièce mécanique que l'on souhaite examiner par contrôle non destructif ou bien, dans un contexte médical, une partie de corps humain que l'on souhaite contrôler de manière non invasive. Dans le mode de réalisation de la figure 1, l'objet 102 est immergé dans un liquide, tel que de l'eau 110, et la sonde 104 est maintenue à distance de l'objet 102 afin que l'eau 110 les sépare. Mais dans un autre mode de réalisation équivalent, la sonde 104 pourrait être au contact direct de l'objet 102.

Les transducteurs $108_1$, ...,$108_N$ sont conçus pour émettre des ondes ultrasonores en direction de l'objet 102 en réponse à des signaux de commande identifiés sous la référence générale C, selon des directions principales parallèles les unes aux autres, indiquées par des flèches en pointillés sur la figure 1, et dans un plan principal qui est celui de la figure.

Les transducteurs $108_1$, ...,$108_N$ sont en outre conçus pour détecter des échos des ondes ultrasonores se réfléchissant sur et dans l'objet 102 et pour fournir des signaux de mesure identifiés sous la référence générale S et correspondant à ces échos. Ainsi, dans l'exemple non limitatif de la figure 1, les transducteurs $108_1$, ...,$108_N$ remplissent à la fois les fonctions d'émission et de réception, mais des récepteurs différents des émetteurs pourraient également être prévus dans des boîtiers différents et indépendants tout en restant conformes avec les principes de l'invention.

Le dispositif de sondage 100 comporte en outre un circuit électronique 112 de commande des transducteurs $108_1$, ...,$108_N$ de la sonde 104 et de traitement des signaux de mesure S. Ce circuit électronique 112 est connecté à la sonde 104 afin de lui transmettre les signaux de commande C et afin de recevoir les signaux de mesure S. Le circuit électronique 112 est par exemple celui d'un ordinateur. Il présente une unité centrale de traitement 114, telle qu'un microprocesseur conçu pour émettre vers la sonde 104 les signaux de commande C et pour recevoir de la sonde 104 les signaux de mesure S, et une mémoire 116 dans laquelle est enregistré un programme d'ordinateur 118.

Le programme d'ordinateur 118 comporte tout d'abord des instructions 120 pour générer les signaux C de commande des transducteurs $108_1$, ...,$108_N$ de manière à :

- activer les transducteurs $108_1$, ...,$108_N$ en tant qu'émetteurs pour L émissions successives d'ondes ultrasonores vers une zone d'intérêt de l'objet 102,
- activer les transducteurs $108_1$, ...,$108_N$ en tant que récepteurs pour, suite à chaque émission successive, recevoir simultanément, par ces N récepteurs et pendant une durée prédéterminée de la profondeur d'inspection souhaitée, N signaux de mesure mesurant en particulier des échos bruités dus à des réflexions de chaque émission dans la zone d'intérêt.

L'ensemble S des LxN signaux de mesure ainsi transmis par les transducteurs $108_1$, ...,$108_N$ est renvoyé par la sonde 104 à l'unité centrale de traitement 114.

Le programme d'ordinateur 118 comporte en outre des instructions 122 pour construire une matrice K(t) de signaux temporels ultrasonores de taille LxN, chaque coefficient $K_{i,j}(t)$ de cette matrice représentant le signal de mesure reçu par le transducteur $108_j$ en réponse à la i-ème émission.

De façon optionnelle, le programme d'ordinateur 118 comporte en outre des instructions 124 pour effectuer un filtrage temporel de la matrice K(t), ce filtrage visant à supprimer toute information se trouvant à des temps de vol exclus de la zone d'intérêt dans l'objet 102.

Le programme d'ordinateur 118 comporte en outre des instructions 126 pour transformer la matrice K(t) en une matrice K($\omega$) de signaux fréquentiels par transformée de Fourier, avantageusement par transformée de Fourier discrète après échantillonnage temporel des coefficients de la matrice K(t), ou, encore plus avantageusement encore, par calcul de FFT (de l'anglais « Fast Fourier Transform ») si le nombre d'échantillons de chaque coefficient de la matrice K(t) le permet.

Le programme d'ordinateur 118 comporte en outre des instructions 128 pour décomposer la matrice K($\omega$) de signaux fréquentiels en valeurs singulières sur une bande de fréquences de manière à la diagonaliser. Cette opération

$$K(\omega) = U.S.V^T = \sum_{i=1}^{L} \lambda_i(\omega).u_i(\omega).v_i^T(\omega),$$

connue permet d'estimer les matrices U, S et V telles que : où U =

$[u_1(\omega), ..., u_L(\omega)]$ et $V=[v_1(\omega), ..., v_N(\omega)]$ sont des matrices orthogonales de tailles respectives LxL et NxN, qui contiennent les vecteurs singuliers en réception et émission, c'est-à-dire les invariants en réception et émission de l'opérateur de retournement temporel, et où S est une matrice diagonale de taille LxN contenant les L valeurs singulières $\lambda_i(\omega)$ de la matrice K($\omega$), ordonnées de façon décroissante à une fréquence de référence donnée $\lambda_1(\omega) \geq ... \geq \lambda_L(\omega) \geq 0$.

De façon optionnelle, le programme d'ordinateur 118 comporte en outre des instructions 130 pour réorganiser, en fonction de la fréquence, la matrice K($\omega$) en une matrice $\underline{K}(\omega)$ par une réorganisation des composantes fréquentielles de ses valeurs singulières et vecteurs singuliers. En effet, si l'écho d'un défaut se situe à un temps de vol proche de celui d'une interface de l'objet 102 (par exemple, un défaut proche du fond de pièce), ou si cet écho a une amplitude proche du bruit de structure, une même valeur singulière de la matrice S peut correspondre à la fois au défaut, à l'interface et au bruit de structure selon les fréquences considérées dans la bande passante spectrale de la sonde. Ceci peut mériter avantageusement une réorganisation des composantes fréquentielles des valeurs singulières et des occurrences fréquentielles correspondantes des vecteurs singuliers associés, de manière à optimiser la correspondance entre valeurs singulières et défauts. Les valeurs propres réorganisées sont notées $\underline{\lambda}_1(\omega) \geq ... \geq \underline{\lambda}_L(\omega) \geq 0$.

Le programme d'ordinateur 118 comporte en outre des instructions 132 pour réduire le rang de la matrice $\underline{K}(\omega)$ (ou celui de la matrice K($\omega$) si les instructions optionnelles 130 ne sont pas exécutées), éventuellement réorganisée, en éliminant une partie des valeurs singulières $\underline{\lambda}_i$. Cette élimination se fait selon un critère de distinction entre valeurs singulières liées à des défauts et valeurs singulières liées à du bruit, les premières étant d'amplitudes supérieures aux secondes. Compte tenu du fait que $\underline{\lambda}_1 \geq ... \geq \underline{\lambda}_L \geq 0$, il s'agit de trouver la valeur P comprise entre 1 et L telle que $\underline{\lambda}_1, ..., \underline{\lambda}_P$ peuvent être considérées comme liées à des défauts à détecter dans l'objet 102 et $\underline{\lambda}_{P+1}, ..., \underline{\lambda}_L$ peuvent être éliminées car considérées comme liées au bruit. En pratique, la détermination de P se fait par l'étude de la courbe de décroissance des amplitudes des valeurs singulières et plus précisément par l'étude de leurs différences d'amplitudes successives (i.e. $\underline{\lambda}_2$-$\underline{\lambda}_1$, ..., $\underline{\lambda}_N$-$\underline{\lambda}_{N-1}$) à une fréquence de référence, par exemple la fréquence centrale du spectre des fréquences de la matrice $\underline{K}(\omega)$. A titre d'exemple non limitatif, P peut être égal à l'indice associé à la valeur singulière pour laquelle la courbe de décroissance des valeurs singulières présente un changement de courbure, plus précisément une rupture de pente, ce qui est indicatif d'une variation importante dans les différences d'amplitudes successives entre valeurs singulières. Une telle détermination de P peut se faire de façon connue en soi par régression linéaire sur l'hypothèse d'une décroissance linéaire en deux morceaux. Dans le cas de petits défauts idéalement espacés les uns des autres, P est égal au nombre de défauts présents dans la zone d'intérêt inspectée. Réduire le rang de la matrice $\underline{K}(\omega)$ revient ainsi à ne conserver que Kf($\omega$) dans l'équation suivante :

$$\underline{K}(\omega) = Kf(\omega) + Kb(\omega) \text{, où :}$$

où :

$$Kf(\omega) = \sum_{i=1}^{P} \underline{\lambda}_i(\omega)\underline{u}_i(\omega)\underline{v}_i^T(\omega) \text{ et } Kb(\omega) = \sum_{i=P+1}^{L} \underline{\lambda}_i(\omega)\underline{u}_i(\omega)\underline{v}_i^T(\omega).$$

La matrice Kf($\omega$) ainsi reconstituée est une matrice débruitée de signaux fréquentiels, le sous-espace de bruit représenté par la matrice Kb($\omega$) ayant été éliminé.

Le programme d'ordinateur 118 comporte en outre des instructions 134 pour transformer la matrice Kf($\omega$) en une matrice débruitée Kf(t) de signaux temporels par transformée de Fourier inverse, avantageusement par transformée de Fourier discrète inverse, ou, encore plus avantageusement encore, par calcul de IFFT (de l'anglais « Inverse Fast Fourier Transform ») si le nombre d'échantillons de chaque coefficient de la matrice Kf($\omega$) le permet.

Enfin, le programme d'ordinateur 118 comporte des instructions 136 pour réaliser une focalisation synthétique en tous points telle que celle définie dans l'article mentionné précédemment de C. Holmes et al sur la matrice débruitée Kf(t). On reconstitue ainsi une image numérique de la zone d'intérêt dont la qualité est meilleure que si la focalisation synthétique avait été réalisée sur la matrice non débruitée K(t). Notamment, le RSB est amélioré.

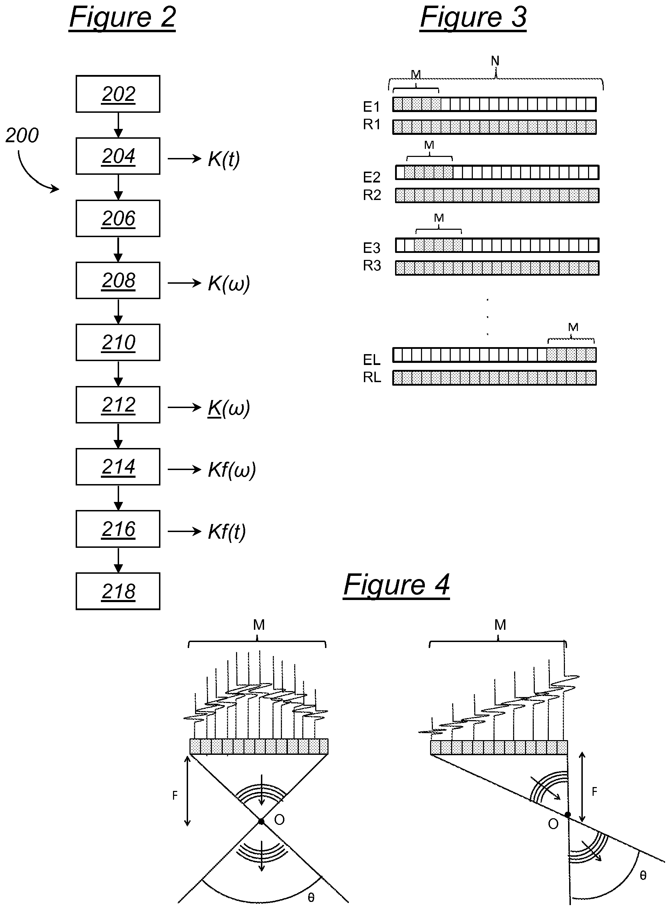

En référence à la figure 2, un procédé 200 d'acquisition et de traitement de signaux ultrasonores mis en oeuvre par le dispositif 100 de la figure 1 va à présent être décrit.

Au cours d'une étape 202, l'unité de traitement 114 exécutant les instructions 120 commande les séquences d'émissions et de réceptions des transducteurs $108_1, ...,108_N$ pour l'acquisition de la matrice K(t).

Ces séquences sont au nombre de L, nombre entier compris entre 1 et N - M + 1, où M, nombre entier compris entre 1 et N, est le nombre de transducteurs adjacents formant la sous-ouverture émettrice qui se déplace le long du boîtier 106 de la sonde 104 par pas d'au moins un transducteur. Le choix du nombre M dépend de la qualité souhaitée de l'onde sphérique émise par la sous-ouverture. Après chaque tir, les signaux sont reçus sur l'ensemble des N transducteurs, numérisés et transmis au circuit électronique 112. La figure 3 illustre ces séquences d'émissions et réceptions, référencées successivement E1 et R1, E2 et R2, E3 et R3, ..., EL et RL, où les transducteurs activés sont représentés en grisé.

Dans le cas où M ≥ 2, des lois de retards prédéterminées sont appliquées aux transducteurs constituant la sous-ouverture de M transducteurs. Elles permettent la focalisation des ondes émises en un point O situé à F mm de profondeur sous la sonde 104. Le front d'onde émis ne s'arrête pas au point O. Une onde diverge de ce point et se propage dans le milieu. Pour un observateur situé à une profondeur supérieure à F, tout se passe comme si l'onde divergente provenait d'une source virtuelle localisée en O. La source virtuelle créée n'a pas une directivité parfaitement omnidirectionnelle comme celle d'une source ponctuelle mais possède une directivité angulaire d'angle θ assez large. Cette directivité peut être ajustée en modifiant les retards appliqués aux transducteurs de la sous-ouverture de telle sorte que l'onde émise par la source virtuelle soit dirigée dans une direction privilégiée dans l'objet 102. On améliore ainsi la détection des défauts dans cette zone. La figure 4 illustre le principe des sources virtuelles selon deux lois de retards fournies à titre d'exemple.

Au cours d'une étape 204, l'unité de traitement 114 exécutant les instructions 122 construit la matrice K(t), chaque coefficient $K_{i,j}(t)$ de cette matrice représentant le signal de mesure reçu par le transducteur $108_j$ en réponse à la i-ème émission, ce signal étant numérisé pour faciliter son traitement ultérieur.

Au cours d'une étape 206 optionnelle, l'unité de traitement 114 exécutant les instructions 124 effectue un filtrage temporel de la matrice K(t), ce filtrage visant à supprimer toute information se trouvant à des temps de vol exclus de la zone d'intérêt. Cette étape 206 a pour but de faciliter ensuite la séparation des deux sous-espaces représentés par les matrices Kf(ω) et Kb(ω), en particulier lorsque les défauts à imager sont proches d'une interface fortement échogène, tel un fond de pièce. Elle permet de limiter la zone à imager à un voisinage proche des défauts en excluant notamment les interfaces échogènes perturbatrices. Elle trouve tout son intérêt dans l'imagerie de fissures se formant depuis le fond de l'objet.

Au cours d'une étape 208, l'unité de traitement 114 exécutant les instructions 126 effectue une transformée de Fourier discrète de la matrice K(t) pour obtenir la matrice K(ω) de signaux fréquentiels.

Au cours d'une étape 210, l'unité de traitement 114 exécutant les instructions 128 diagonalise la matrice K(ω) en la décomposant en valeurs singulières, comme détaillé précédemment.

Au cours d'une étape 212 optionnelle, l'unité de traitement 114 exécutant les instructions 130 réorganise la matrice K(ω) en une matrice $\underline{K}(\omega)$ par une réorganisation des composantes fréquentielles des valeurs singulières et vecteurs singuliers des matrices de décomposition S(ω), U(ω) et V(ω) en de nouvelles matrices de décomposition $\underline{S}(\omega)$, $\underline{U}(\omega)$ et $\underline{V}(\omega)$.

Selon une première variante de réorganisation des composantes fréquentielles des valeurs singulières et vecteurs singuliers, pour chaque valeur singulière $\lambda_i(\omega)$, $1 \le i \le L$ :

- on choisit une occurrence fréquentielle de référence d'un vecteur singulier associé à $\lambda_i(\omega)$, par exemple le vecteur singulier de la matrice U, $u_i(\omega)$, cette occurrence fréquentielle de référence étant notée $u_i^{ref} = u_i[\omega_{ref}]$ (il s'agit généralement de la fréquence centrale du spectre des fréquences de K(ω) pour laquelle on observe un détachement de la valeur singulière le plus élevé),
- on calcule la phase de cette occurrence fréquentielle de référence $u_i^{ref}$, on normalise cette phase dans l'intervalle [0,1], puis
- pour chaque fréquence ω du spectre des fréquences de K(ω) :

  • on calcule les phases des occurrences fréquentielles $u_k[\omega]$ des autres vecteurs singuliers de la matrice U et on normalise ces phases dans l'intervalle [0,1],
  • on calcule la corrélation entre la phase normalisée de $u_i^{ref}$ et la phase normalisée de chaque $u_k[\omega]$,
  • on détermine la valeur j de k pour laquelle la corrélation est la plus forte, et
  • on affecte à $\lambda_i[\omega]$ la valeur de $\lambda_j[\omega]$, à $u_i[\omega]$ la valeur de $u_j[\omega]$, et à $v_i[\omega]$ la valeur de $v_j[\omega]$.

On obtient ainsi de nouvelles matrices $\underline{S}(\omega)$, $\underline{U}(\omega)$ et $\underline{V}(\omega)$ réorganisées et donc une nouvelle matrice réorganisée $\underline{K}(\omega) = \underline{U}.\underline{S}.\underline{V}^T$.

Selon une deuxième variante de réorganisation des composantes fréquentielles des valeurs singulières et vecteurs singuliers, pour chaque valeur singulière $\lambda_i(\omega)$, $1 \le i \le L$ :

- on choisit une occurrence fréquentielle de référence d'un vecteur singulier associé à $\lambda_i(\omega)$, par exemple le vecteur singulier de la matrice U, $u_i(\omega)$, cette occurrence fréquentielle de référence étant notée $u_i^{ref} = u_i[\omega_{ref}]$ et correspondant à une occurrence fréquentielle maximale de la valeur singulière $\lambda_i(\omega)$ (il s'agit généralement également de la fréquence centrale du spectre des fréquences de K(ω)),
- on calcule la phase de cette occurrence fréquentielle de référence $u_i^{ref}$, puis

- en définissant un incrément élémentaire $\Delta\omega$ permettant de balayer itérativement le spectre des fréquences de $K(\omega)$ :

    • on calcule les phases des occurrences fréquentielles $U_k[\omega_{ref} \pm \Delta\omega]$ des autres vecteurs singuliers de la matrice U, on calcule la corrélation entre la phase de $u_i^{ref}$ et la phase de chaque $u_k[\omega_{ref} \pm \Delta\omega]$, on détermine la valeur j de k pour laquelle la corrélation est la plus forte, et on affecte à $\lambda_i[\omega_{ref} \pm \Delta\omega]$ la valeur de $\lambda_j[\omega_{ref} \pm \Delta\omega]$, à $u_i[\omega_{ref} \pm \Delta\omega]$ la valeur de $u_j[\omega_{ref} \pm \Delta\omega]$, et à $v_i[\omega_{ref} \pm \Delta\omega]$ la valeur de $v_j[\omega_{ref} \pm \Delta\omega]$,
    • on prend pour nouvelle occurrence fréquentielle de référence celle du vecteur singulier ayant maximisé la corrélation à l'étape précédente à la fréquence $\omega_{ref} \pm \Delta\omega$ et on reprend les calculs de corrélation de l'étape précédente à $\omega_{ref} \pm 2\Delta\omega$,
    • on poursuit ainsi de proche en proche l'exploration de $K(\omega)$ dans la bande passante spectrale de la sonde jusqu'à ses bornes.

On obtient ainsi également de nouvelles matrices $\underline{S}(\omega)$, $\underline{U}(\omega)$ et $\underline{V}(\omega)$ réorganisées et donc une nouvelle matrice réorganisée $\underline{K}(\omega) = \underline{U}.\underline{S}.\underline{V}^T$.

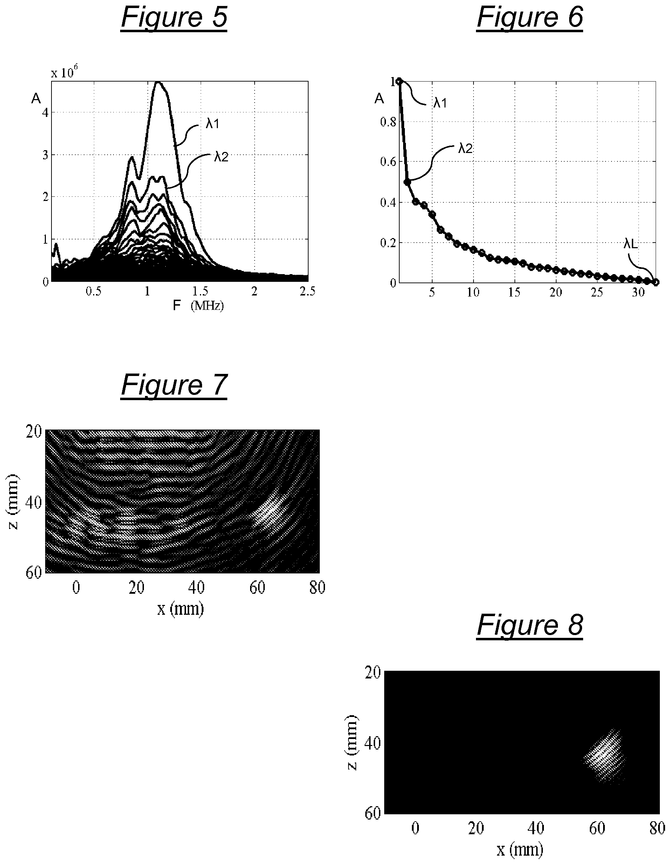

La matrice réorganisée $\underline{K}(\omega)$ se décompose donc maintenant en valeurs singulières présentant chacune des vecteurs singuliers optimisant leurs corrélations à toutes les fréquences, soit par rapport à une fréquence de référence constante choisie (première variante), soit de proche en proche (deuxième variante). Ainsi, après réorganisation de la matrice $\underline{K}(\omega)$, un défaut est associé à la même valeur singulière pour toutes les fréquences dans la bande spectrale de la sonde. Un exemple de distributions fréquentielles en amplitude (A) de L valeurs propres est illustré sur la figure 5. La décroissance en amplitude normalisée de ces valeurs propres, soit en moyenne dans le spectre des fréquences de la matrice $\underline{K}(\omega)$, soit à une fréquence centrale choisie, est par exemple illustrée sur la figure 6 : dans cet exemple, on note une différence d'amplitude significative entre les première et deuxième valeurs singulières.

Au cours d'une étape 214, l'unité de traitement 114 exécutant les instructions 132 réduit le rang de la matrice $\underline{K}(\omega)$ (ou ce lui de la matrice $K(\omega)$ si l'étape optionnelle précédente n'a pas été exécutée) en ne conservant que

$$Kf(\omega) = \sum_{i=1}^{P} \underline{\lambda}_i(\omega).\underline{u}_i(\omega).\underline{v}_i^T(\omega).$$

Au cours d'une étape 216, l'unité de traitement 114 exécutant les instructions 134 effectue une transformée de Fourier inverse discrète de la matrice $Kf(\omega)$ pour obtenir la matrice débruitée $Kf(t)$ de signaux temporels.

Enfin, au cours d'une dernière étape 218, l'unité de traitement 114 exécutant les instructions 136 reconstitue une image numérique de la zone effective d'intérêt par focalisation synthétique à partir de la matrice débruitée $Kf(t)$. A titre de comparaison, les figures 7 et 8 illustrent des exemples d'images numériques reconstituées, soit directement après l'étape 204 de construction de la matrice $K(t)$ pour la figure 7, soit après exécution de l'ensemble des étapes 202 à 216 pour la figure 8.

On notera que, de façon concrète, les exemples illustrés des figures 5 à 8 ont été obtenus par expérimentation sur une pièce bruitée en acier austénoferritique, d'épaisseur 70 mm dans laquelle est usiné un défaut artificiel de type Trou Génératrice (TG) de 2 mm de diamètre, à une profondeur de 40 mm. On cherche à imager le défaut à l'aide d'un capteur de fréquence centrale 1,1 MHz et composé de 64 transducteurs émetteurs/récepteurs. Compte-tenu du pas inter-éléments (i.e. la largeur d'un transducteur additionnée à l'espace entre deux transducteurs voisins) du capteur (1,4 mm) et de la profondeur du défaut, seuls les 32 éléments centraux sont activés. A titre d'exemple d'application, ce capteur est posé sur l'objet 102 à 45° du défaut TG. Pour améliorer l'acquisition par rapport à une acquisition FMC classique, les émissions ont été effectuées à l'aide d'une sous-ouverture constituée de M = 7 transducteurs (38 éléments centraux sont alors activés pour 32 émissions successives) et la loi de retards appliquée a été définie pour 7 transducteurs et de telle sorte que les ondes émises soient principalement orientées à 45°.

Il apparaît clairement qu'un procédé et un dispositif tels que ceux détaillés ci-dessus permettent de débruiter efficacement les signaux ultrasonores acquis sous forme d'une matrice $K(t)$ telle que celle définie précédemment.

On notera par ailleurs que l'invention n'est pas limitée au mode de réalisation décrit précédemment. Il apparaîtra en effet à l'homme de l'art que diverses modifications peuvent être apportées au mode de réalisation décrit ci-dessus, à la lumière de l'enseignement qui vient de lui être divulgué.

En particulier, les instructions de programme d'ordinateur pourraient être remplacées par des circuits électroniques dédiés aux fonctions réalisées lors de l'exécution de ces instructions.

D'une façon générale, dans les revendications qui suivent, les termes utilisés ne doivent pas être interprétés comme limitant les revendications au mode de réalisation exposé dans la présente description, mais doivent être interprétés pour y inclure tous les équivalents que les revendications visent à couvrir du fait de leur formulation et dont la prévision est à la portée de l'homme de l'art en appliquant ses connaissances générales à la mise en oeuvre de l'enseignement qui vient de lui être divulgué.

**EP 2 872 884 B1**

**Revendications**

**1.** Procédé (200) de traitement de signaux ultrasonores (S) issus d'une acquisition par sondage ultrasonore comportant les étapes suivantes :

- commande (202) d'une pluralité de transducteurs d'émission ($108_1$, ..., $108_N$) pour L émissions successives d'ondes ultrasonores vers une zone d'intérêt (102),
- commande (202) de N transducteurs de réception ($108_1$, ..., $108_N$) de manière à recevoir simultanément et pendant une durée prédéterminée, pour chaque émission successive, N signaux de mesure, mesurant en particulier des échos bruités dus à des réflexions de l'émission considérée dans la zone d'intérêt,
- obtention (204) d'une matrice (K(t)) de signaux temporels ultrasonores de taille LxN, chaque coefficient $K_{i,j}(t)$ de cette matrice représentant le signal de mesure reçu par le j-ème transducteur de réception dû à la i-ème émission,
- transformation (208) de la matrice (K(t)) de signaux temporels en une matrice (K($\omega$)) de signaux fréquentiels,
- décomposition en valeurs singulières (210) de la matrice (K($\omega$)) de signaux fréquentiels,

**caractérisé en ce qu'**il comporte une étape de débruitage (208, 210, 212, 214, 216) de la matrice (K(t)) des signaux temporels ultrasonores par :

- élimination (214) d'une partie des valeurs singulières et vecteurs singuliers associés issus de ladite décomposition en valeurs singulières (210) selon un critère prédéterminé de distinction entre valeurs singulières liées à des défauts et valeurs singulières liées à du bruit, ce critère portant sur des différences d'amplitudes successives entre valeurs singulières dans une série décroissante d'amplitudes des valeurs singulières déterminées à partir de la matrice (K($\omega$)) des signaux fréquentiels,
- reconstruction (214) d'une matrice (Kf($\omega$)) débruitée de signaux fréquentiels à partir des valeurs singulières et vecteurs singuliers non éliminés, et
- transformation inverse (216) de cette matrice débruitée (Kf($\omega$)) de signaux fréquentiels en une matrice débruitée (Kf(t)) de signaux temporels.

**2.** Procédé (200) de traitement de signaux ultrasonores selon la revendication 1, dans lequel le critère prédéterminé de distinction entre valeurs singulières liées à des défauts et valeurs singulières liées à du bruit est un critère de changement de courbure dans cette série décroissante des amplitudes de valeurs singulières.

**3.** Procédé (200) de traitement de signaux ultrasonores selon la revendication 1, dans lequel le critère prédéterminé de distinction entre valeurs singulières liées à des défauts et valeurs singulières liées à du bruit est un critère de rupture de pente déterminée par régression linéaire sur l'hypothèse d'une décroissance linéaire en deux morceaux dans cette série décroissante des amplitudes de valeurs singulières.

**4.** Procédé (200) de traitement de signaux ultrasonores selon l'une quelconque des revendications 1 à 3, dans lequel la transformation (208) et la transformation inverse (216) sont des transformations de Fourier discrètes.

**5.** Procédé (200) de traitement de signaux ultrasonores selon l'une quelconque des revendications 1 à 4, comportant, avant l'étape de débruitage (208, 210, 212, 214, 216), une étape (206) de filtrage de la matrice (K(t)) des signaux temporels par suppression de toute information se trouvant à des temps de vol exclus de la zone d'intérêt (102).

**6.** Procédé (200) de traitement de signaux ultrasonores selon l'une quelconque des revendications 1 à 5, comportant une étape (212) de réorganisation de composantes fréquentielles des valeurs singulières et vecteurs singuliers de la matrice (K($\omega$)) des signaux fréquentiels sur la base d'une optimisation de corrélations entre occurrences fréquentielles des vecteurs singuliers de manière à optimiser une correspondance entre valeurs singulières et défauts dans la zone d'intérêt (102) et ainsi optimiser le filtrage du bruit.

**7.** Procédé (200) de traitement de signaux ultrasonores selon l'une quelconque des revendications 1 à 6, dans lequel, à chaque émission successive, M transducteurs d'émission adjacents sont sollicités et une loi de retards est appliquée à ces M transducteurs d'émission de manière à émettre une onde sphérique issue d'une source virtuelle (O) située à une distance prédéterminée (F) de ladite pluralité de transducteurs d'émission ($108_1$, ..., $108_N$).

**8.** Procédé (200) de traitement de signaux ultrasonores selon l'une quelconque des revendications 1 à 7, dans lequel chaque réception est effectuée par L' transducteurs de réception virtuels, chaque transducteur de réception virtuel étant formé par M' transducteurs de réception adjacents auxquels une loi de retards est appliquée.

9. Procédé (200) de traitement de signaux ultrasonores selon l'une quelconque des revendications 1 à 8, comportant une étape supplémentaire (218) de reconstitution d'une image numérique de la zone d'intérêt (102) à partir de la matrice débruitée (Kf(t)) de signaux temporels, notamment par un traitement de type focalisation synthétique en tous points.

10. Programme d'ordinateur (118) téléchargeable depuis un réseau de communication et/ou enregistré sur un support lisible par ordinateur et/ou exécutable par un processeur (114), **caractérisé en ce qu'**il comprend des instructions pour l'exécution des étapes d'un procédé (200) de traitement de signaux ultrasonores selon l'une quelconque des revendications 1 à 9, lorsque ledit programme est exécuté sur un ordinateur (112).

11. Dispositif de sondage à ultrasons (100) comportant :

- une sonde (104) comprenant une pluralité de transducteurs $(108_1, ..., 108_N)$ d'émission à ultrasons et une pluralité de transducteurs $(108_1, ..., 108_N)$ de réception à ultrasons, et
- des moyens (112) de commande des transducteurs et de traitement conçus pour mettre en oeuvre un procédé (200) de traitement de signaux ultrasonores selon l'une quelconque des revendications 1 à 9.

**Patentansprüche**

1. Verfahren (200) zur Verarbeitung von Ultraschallsignalen (S), hervorgegangen aus einer Erfassung durch Echolotung, aufweisend die folgenden Schritte:

- Steuern (202) einer Vielzahl von Sendetransducern $(108_1, ..., 108_N)$ für L aufeinanderfolgende Sendungen von Ultraschallwellen in Richtung eines interessierenden Bereichs (102),
- Steuern (202) von N Empfangstransducern $(108_1, ..., 108_N)$ derart, dass gleichzeitig und während einer vorbestimmten Dauer für jede aufeinanderfolgende Sendung N Messsignale empfangen werden, die insbesondere Rauschechos messen, die Reflexionen der in dem interessierenden Bereich betrachteten Sendung geschuldet sind,
- Erhalten (204) einer Matrix (K(t)) temporaler Ultraschallsignale der Größe LxN, wobei jeder Koeffizient $K_{i,j}(t)$ dieser Matrix das von dem j-ten Empfangstransducer aufgrund der i-ten Sendung empfangene Messsignal repräsentiert,
- Transformieren (208) der Matrix (K(t)) temporaler Signale in eine Matrix $(K(\omega))$ von Frequenzsignalen,
- Zerlegen der Matrix $(K(\omega))$ von Frequenzsignalen in Einzelwerte (210),

**dadurch gekennzeichnet, dass** es einen Rauschunterdrückungsschritt (208, 210, 212, 214, 216) der Matrix (K(t)) der temporalen Ultraschallsignale aufweist durch:

- Entfernen (214) eines Teils der Einzelwerte und zugeordneten Einzelvektoren, hervorgegangen aus der Zerlegung in Einzelwerte (210), gemäß einem vorbestimmten Unterscheidungskriterium zwischen Einzelwerten, die mit Fehlern verbunden sind, und Einzelwerten, die mit Rauschen verbunden sind, wobei sich dieses Kriterium auf Differenzen aufeinanderfolgender Amplituden zwischen Einzelwerten in einer abnehmenden Amplitudenreihe der auf der Basis der Matrix $(K(\omega))$ der Frequenzsignale bestimmten Einzelwerte bezieht,
- Wiederherstellen (214) einer von Frequenzsignalen entrauschten Matrix $(Kf(\omega))$ auf der Basis der nicht entfernten Einzelwerte und Einzelvektoren, und
- inverses Transformieren (216) dieser von Frequenzsignalen entrauschten Matrix $(Kf(\omega))$ in eine von temporalen Signalen entrauschte Matrix (Kf(t)).

2. Verfahren (200) zur Verarbeitung von Ultraschallsignalen nach Anspruch 1, wobei das vorbestimmte Unterscheidungskriterium zwischen Einzelwerten, die mit Fehlern verbunden sind, und Einzelwerten, die mit Rauschen verbunden sind, ein Kurvenänderungskriterium in dieser abnehmenden Reihe der Einzelwertamplituden ist.

3. Verfahren (200) zur Verarbeitung von Ultraschallsignalen nach Anspruch 1, wobei das vorbestimmte Unterscheidungskriterium zwischen Einzelwerten, die mit Fehlern verbunden sind, und Einzelwerten, die mit Rauschen verbunden sind, ein Neigungsunterbrechungskriterium, bestimmt durch lineare Regression auf der Hypothese einer linearen Abnahme in zwei Stücken in dieser abnehmenden Reihe der Einzelwertamplituden, ist.

**4.** Verfahren (200) zur Verarbeitung von Ultraschallsignalen nach einem der Ansprüche 1 bis 3, wobei die Transformation (208) und die inverse Transformation (216) diskrete Fourier-Transformationen sind.

**5.** Verfahren (200) zur Verarbeitung von Ultraschallsignalen nach einem der Ansprüche 1 bis 4, aufweisend, vor dem Rauschunterdrückungsschritt (208, 210, 212, 214, 216), einen Schritt des Filterns (206) der Matrix (K(t)) der temporalen Signale durch Unterdrückung aller Informationen, die sich in Flugzeiten befinden, die aus dem interessierenden Bereich (102) ausgeschlossen sind.

**6.** Verfahren (200) zur Verarbeitung von Ultraschallsignalen nach einem der Ansprüche 1 bis 5, aufweisend einen Reorganisationsschritt (212) von Frequenzbestandteilen der Einzelwerte und Einzelvektoren der Matrix (K($\omega$)) der Frequenzsignale auf der Basis einer Optimierung von Korrelationen zwischen Auftrittshäufigkeiten der Einzelvektoren derart, dass eine Übereinstimmung zwischen Einzelwerten und Fehlern in dem interessierenden Bereich (102) optimiert und damit die Filterung des Rauschens optimiert wird.

**7.** Verfahren (200) zur Verarbeitung von Ultraschallsignalen nach einem der Ansprüche 1 bis 6, wobei, bei jeder aufeinanderfolgenden Sendung, M benachbarte Sendetransducer beansprucht werden und ein Verzögerungsgesetz auf diese M Sendetransducer derart angewendet wird, dass eine sphärische Welle, hervorgegangen aus einer virtuellen Quelle (O), die sich in einem vorbestimmten Abstand (F) von der Vielzahl von Sendetransducern ($108_1$, ..., $108_N$) befindet, gesendet wird.

**8.** Verfahren (200) zur Verarbeitung von Ultraschallsignalen nach einem der Ansprüche 1 bis 7, wobei jeder Empfang von L' virtuellen Empfangstransducern durchgeführt wird, wobei jeder virtuelle Empfangstransducer von M' benachbarten Empfangstransducern gebildet ist, auf welche ein Verzögerungsgesetz angewendet wird.

**9.** Verfahren (200) zur Verarbeitung von Ultraschallsignalen nach einem der Ansprüche 1 bis 8, aufweisend einen zusätzlichen Wiederherstellungsschritt (218) eines digitalen Bildes des interessierenden Bereichs (102) auf der Basis der von temporalen Signalen entrauschten Matrix (Kf(t)), insbesondere durch eine Verarbeitung vom Typ synthetische Total-Fokussierung.

**10.** Rechnerprogramm (118), herunterladbar von einem Kommunikationsnetz und/oder aufgezeichnet auf einem rechnerlesbaren Träger und/oder ausführbar von einem Prozessor (114), **dadurch gekennzeichnet, dass** es Befehle für die Ausführung der Schritte eines Verfahrens (200) zur Verarbeitung von Ultraschallsignalen nach einem der Ansprüche 1 bis 9 umfasst, wenn das Programm auf einem Rechner (112) ausgeführt wird.

**11.** Echolotungsvorrichtung (100), aufweisend:

- eine Sonde (104), umfassend eine Vielzahl von Ultraschall-Sendetransducern ($108_1$, ..., $108_N$) und eine Vielzahl von Ultraschall-Empfangstransducern ($108_1$, ..., $108_N$), und
- Steuer- und Verarbeitungsmittel (112) der Transducer, die für die Durchführung eines Verfahrens (200) zur Verarbeitung von Ultraschallsignalen nach einem der Ansprüche 1 bis 9 ausgebildet sind.

**Claims**

**1.** A method (200) for processing ultrasonic signals (S) acquired by ultrasonic probing comprising the following steps:

- controlling (202) a plurality of emission transducers ($108_1$, ..., $108_N$) for L successive emissions of ultrasound waves to an area of interest (102),
- controlling (202) N reception transducers ($108_1$, ..., $108_N$) so as to simultaneously receive and for a predetermined time, for each successive emission, N measurement signals, particularly measuring noisy echoes due to reflections of the emission in question in the area of interest,
- obtaining (204) an array (K(t)) of ultrasonic time signals of the size LxN, each coefficient $K_{i,j}(t)$ of this array representing the measurement signal received by the j-th reception transducer due to the i-th emission,
- transforming (208) the time signal array (K(t)) into a frequency signal array (K($\omega$)),
- performing a singular value decomposition (210) of the frequency signal array (K($\omega$)),

**characterized in that** it comprises a step for denoising (208, 210, 212, 214, 216) the ultrasonic time signal array (K(t)) by:

- removing (214) some of the singular values and associated singular vectors obtained from said singular value decomposition (210) according to a predetermined criterion for distinguishing between singular values associated with defects and singular values associated with noise, this criterion relating to successive amplitude differences between singular values in a decreasing series of amplitudes of said singular values determined on the basis of the frequency signal array (K($\omega$)),
- reconstructing (214) a denoised frequency signal array (Kf($\omega$)) on the basis of unremoved singular values and singular vectors, and
- performing an inverse transform (216) of this denoised frequency signal array (Kf($\omega$)) into a denoised time signal array (Kf(t)).

2.  The method (200) for processing ultrasonic signals according to claim 1, wherein the predetermined criterion for distinguishing between singular values associated with defects and singular values associated with noise is a curvature change criterion in this decreasing series of singular value amplitudes.

3.  The method (200) for processing ultrasonic signals according to claim 1, wherein the predetermined criterion for distinguishing between singular values associated with defects and singular values associated with noise is a change of slope criterion which is determined by a linear regression assuming a two-piece piecewise linear decreasing in this decreasing series of singular value amplitudes.

4.  The method (200) for processing ultrasonic signals according to any of claims 1 to 3, wherein the transform (208) and inverse transform (216) are discrete Fourier transforms.

5.  The method (200) for processing ultrasonic signals according to any of claims 1 to 4, comprising, before the denoising step (208, 210, 212, 214, 216), a step (206) for filtering the time signal array (K(t)) by deleting any data situated at times of flight excluded from the area of interest (102).

6.  The method (200) for processing ultrasonic signals according to any of claims 1 to 5, comprising a step (212) for reorganizing frequency components of the singular values and singular vectors of the frequency signal array (K($\omega$)) on the basis of an optimization of correlations between frequency occurrences of the singular vectors so as to optimize a correspondence between singular values and defects in the area of interest (102) and thus optimize noise filtering.

7.  The method (200) for processing ultrasonic signals according to any of claims 1 to 6, wherein, at each successive emission, M adjacent emission transducers are activated and a delay sequence is applied to these M emission transducers so as to emit a spherical wave from a virtual source (O) situated at a predetermined distance (F) from said plurality of emission transducers ($108_1$, ..., $108_N$).

8.  The method (200) for processing ultrasonic signals according to any of claims 1 to 7, wherein each reception is performed by L' virtual reception transducers, each virtual reception transducer consisting of M' adjacent reception transducers to which a delay sequence is applied.

9.  The method (200) for processing ultrasonic signals according to any of claims 1 to 8, comprising an additional step (218) for reconstructing a digital image of the area of interest (102) from the denoised time signal array (Kf(t)), particularly by means of synthetic total focusing processing.

10. A computer program (118) downloadable from a communication network and/or saved on a computer-readable medium and/or executable by a processor (114), **characterized in that** it comprises instructions for executing steps of a method (200) for processing ultrasonic signals according to any of claims 1 to 9, when said program is executed on a computer (112).

11. An ultrasonic probing device (100) comprising:

- a probe (104) comprising a plurality of ultrasonic emission transducers ($108_1$, ..., $108_N$) and a plurality of ultrasonic reception transducers ($108_1$, ..., $108_N$), and
- transducer control and processing means (112) designed to implement a method (200) for processing ultrasonic signals according to any of claims 1 to 9.

## Figure 1

## Figure 2

*200*

202

204 → *K(t)*

206

208 → *K(ω)*

210

212 → *K̲(ω)*

214 → *Kf(ω)*

216 → *Kf(t)*

218

## Figure 3

## Figure 4

## Figure 5

## Figure 6

## Figure 7

## Figure 8

## RÉFÉRENCES CITÉES DANS LA DESCRIPTION

**Documents brevets cités dans la description**

- US 20110125014 A

**Littérature non-brevet citée dans la description**

- **C. HOLMES et al.** Post-processing of the full matrix of ultrasonic transmit-receive array data for non-destructive evaluation. *NDT&E International,* 15 Juin 2005, vol. 38, 701-711
- **A. FIDAHOUSSEN et al.** Imaging of defects in several complex configurations by simulation-helped processing of ultrasonic array data. *Review of Quantitative Nondestructive Evaluation,* 2009, vol. 29, 847-854

- **M. KARAMAN et al.** Synthetic aperture imaging for small scale systems. *IEEE Transactions on Ultrasonics, Ferroelectrics, and Frequency Control,* Mai 1995, vol. 42 (3), 429-442
- **C. PRADA et al.** Eigenmodes of the time reversai operator: a solution to selective focusing in multiple-target media. *Wave Motion,* 1994, vol. 20, 151-163